# FASCICULE DE BREVET EUROPEEN

(11) **EP 3 647 188 B1**
(45) Date de publication et mention de la délivrance du brevet: **01.09.2021**
(21) Numéro de dépôt: 19207037.3
(22) Date de dépôt: 05.11.2019
(51) Int. Cl.: B64C 25/36, B64C 25/42, F16D 65/847, F16D 65/78

(54) **ECRAN THERMIQUE POUR ROUE FREINEE D'AERONEF**
HITZESCHILD FÜR GEBREMSTES RAD EINES LUFTFAHRZEUGS
HEAT SHIELD FOR A BRAKED AIRCRAFT WHEEL

(30) Priorité: 05.11.2018 FR 1860176
(43) Date de publication de la demande: 06.05.2020
(73) Titulaire: Safran Landing Systems, 78140 Vélizy-Villacoublay (FR)
(72) Inventeur: Brodard, Maxime, 77550 Moissy-Cramayel (FR); Robin, Jean-Baptiste, 77550 Moissy-Cramayel (FR)
(74) Mandataire: Lavialle, Bruno François Stéphane

(56) Documents cités:
- EP-A1- 0 555 822
- EP-A1- 1 304 240
- EP-A2- 3 159 571
- FR-A1- 2 990 188
- GB-A- 1 402 534
- US-A- 4 084 857
- US-A- 4 856 619
- US-B2- 8 523 108
- US-B2- 9 718 447

## Description

L'invention concerne une roue freinée équipée d'un écran thermique pour protéger la jante de la chaleur générée par les disques de frein.

### ARRIERE PLAN DE L'INVENTION

Les roues des atterrisseurs principaux d'aéronef sont généralement équipées de freins qui comportent une pile de disques logée à l'intérieur de la jante de la roue. Le dégagement de chaleur consécutif au frottement des disques entre eux lors d'un freinage peut être important, et il est connu d'équiper les jantes d'un écran thermique interposé entre la jante et les disques pour protéger la jante et le pneumatique porté par la jante de cet afflux de chaleur. Les écrans thermiques sont généralement constitués de plusieurs tôles de métal très fines séparées par une mince lame d'air. L'écran thermique a pour fonction de protéger la jante du rayonnement généré à l'interface entre les disques.

L'évacuation du flux de chaleur généré par les disques est délicate, compte tenu de l'encombrement réduit autour des disques. En particulier, il est connu d'utiliser un ventilateur de refroidissement dans l'essieu de la roue dont l'hélice aspire au travers des orifices du voile de la jante l'air se trouvant autour des disques pour organiser une convection forcée. Cependant, toutes les roues freinées ne sont pas équipées d'un tel dispositif de convection forcée.

Ce type de ventilation active est efficace pour réduire le temps d'immobilisation de l'aéronef entre deux rotations, mais comporte quelques inconvénients :
- La nécessité de créer un circuit électrique jusqu'au bout de l'essieu pour alimenter le ventilateur ;
- Le ventilateur doit être démonté à chaque opération de maintenance de la roue freinée, ainsi qu'à chaque changement de pneumatique ;
- Il génère un bruit intense qui peut être gênant pour les personnels au sol ainsi que les passagers passant à proximité de l'avion ;
- Il s'agit d'un dispositif lourd qui contribue à l'augmentation de la consommation en carburant de l'avion et donc des coûts de fonctionnement de l'aéronef ;
- En tant que dispositif électromécanique, il est sujet à des pannes d'origines multiples (défaillance électrique, défaillance mécanique, encrassement, chocs, ...) et contribue à l'augmentation des coûts de maintenance des compagnies aériennes ainsi qu'à la réduction de la disponibilité des aéronefs (immobilisations non planifiées en cas de panne) ;
- L'apport massif d'air frais sur les disques de frein chauds accélère leur oxydation catalytique, ce qui contribue à la réduction de la durée de vie du frein et donc à l'augmentation des coûts de fonctionnement de l'aéronef.

Ces inconvénients poussent les compagnies aériennes à demander des solutions de refroidissement passif. On a proposé dans le document FR 2 990 188 de disposer dans la jante des écrans thermiques à profil en pente pour favoriser l'évacuation des radiations thermiques. Cependant, un tel profil nécessite des jantes adaptées, ce qui n'est pas toujours possible.

Le document US 4 856 619 divulgue une roue freinée d'aéronef comportant une jante solidaire d'un moyeu pour son montage à rotation sur un essieu de l'aéronef selon un axe de rotation, la roue étant équipée d'un écran thermique s'étendant en regard d'une face interne de la jante pour protéger la jante du rayonnement thermique généré par une pile de disques s'étendant à l'inférieur de la jante, l'écran thermique comportant une face en regard des disques.

### OBJET DE L'INVENTION

L'invention vise à proposer une roue freinée d'aéronef comportant un écran thermique favorisant l'évacuation du flux de chaleur généré par les disques de frein.

### PRESENTATION DE L'INVENTION

En vue de la réalisation de ce but, on propose une roue freinée d'aéronef comportant une jante solidaire d'un moyeu pour son montage à rotation sur un essieu de l'aéronef selon un axe de rotation, la roue étant équipée d'un écran thermique s'étendant en regard d'une face interne de la jante pour protéger la jante du rayonnement thermique généré par une pile de disques s'étendant à l'intérieur de la jante. Selon l'invention, l'écran thermique comporte une face en regard des disques qui comporte des nervures longitudinales s'étendant en service parallèlement à l'axe de rotation de la roue.

Ces nervures longitudinales définissent entre elles des chemins de convection qui favorisent la circulation d'air entre l'écran thermique et les disques des freins.

De préférence, les nervures sont venues de matière avec l'écran thermique.

Selon un mode de réalisation particulièrement intéressant de l'invention, l'écran thermique comporte une pluralité de boucliers thermique (aussi appelés pétales), chacun insérés entre deux barrettes de la jante servant à entraîner certains des disques de freins en rotation.

Selon un mode particulier de réalisation de l'invention, chaque bouclier thermique est prolongé à l'extérieur de la jante par un radiateur, les nervures longitudinales s'étendant sous une semelle du radiateur.

Ainsi, les boucliers servent au surplus de capteur de chaleur, les nervures longitudinales augmentant la surface d'échange du bouclier favorisant l'absorption de chaleur qui est alors conduite vers le radiateur. Les nervures longitudinales ont en outre un rôle de raidisseur mécanique, diminuant les vibrations du radiateur s'étendant en porte-à-faux du reste du bouclier.

De préférence alors, le bouclier est réalisé dans un matériau thermiquement conducteur, par exemple un alliage d'aluminium. Le cas échéant, il convient de revêtir la surface du bouclier en regard des disques d'une protection thermique destinée à éviter son endommagement par échauffement mais qui n'obère pas la capacité du bouclier à capter et conduire la chaleur vers le radiateur.

### DESCRIPTION DES FIGURES

L'invention sera mieux comprise à la lumière de la description qui suit d'un mode particulier de réalisation de l'invention, en référence aux figures des dessins annexés, parmi lesquelles :
- la figure 1 est une vue en perspective d'une roue freinée équipée de boucliers thermiques d'un écran thermique selon l'invention ;
- la figure 2 est une vue en perspective de dessus d'un bouclier thermique selon un premier mode particulier de réalisation de l'invention ;
- la figure 3 est une vue en perspective de dessous du bouclier thermique de la figure 2 ;
- la figure 4 est une vue en perspective d'un bouclier thermique équipé d'un radiateur selon un deuxième mode particulier de réalisation de l'invention ;
- la figure 5 est une vue en perspective de dessous du bouclier thermique de la figure 4 ;
- la figure 6 est une vue en perspective d'un bouclier thermique équipé d'un radiateur selon un troisième mode particulier de réalisation de l'invention adapté à une jante à profil en pente ;
- la figure 7 est une vue en perspective de dessous du bouclier thermique de la figure 6 ;
- la figure 8 est une vue de dessus du bouclier thermique de la figure 6 ;
- la figure 9 est une vue de détail en perspective montrant les ailettes du bouclier thermique de la figure 6 ;
- la figure 10 est une vue de détail encore agrandie des ailettes du bouclier thermique de la figure 6.

### DESCRIPTION DETAILLEE DE L'INVENTION

L'invention concerne des écrans thermiques destinés à équiper une jante de roue d'aéronef et comportant une face en regard des disques qui comporte des nervures longitudinales s'étendant en service parallèlement à l'axe de rotation de la roue.

On illustre ici l'invention par des écrans thermiques formés de boucliers thermiques 11,111,211 selon trois modes de réalisation distincts s'insérant entre des barrettes de la jante, et comportant tous les trois des nervures longitudinales 16,116,216 selon l'invention. Ici, le bouclier 11 est dépourvu de radiateur à ailettes, tandis que les boucliers 111 et 211 sont pourvus de radiateurs à ailettes.

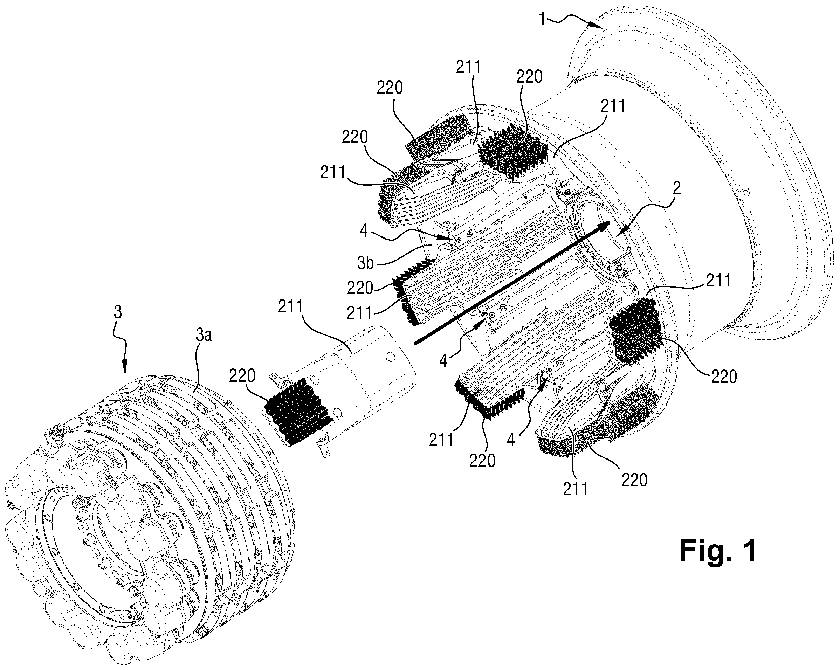

On explique tout d'abord le principe de montage de ces boucliers thermiques sur la jante 1 d'une roue d'aéronef en référence à la figure 1, puis les trois modes de réalisation de ces boucliers thermiques seront respectivement décrits plus en détail.

En référence donc à la figure 1, les roues d'aéronef comportent une jante 1 destinée à recevoir un pneumatique, et reliée par un voile à un moyeu 2 pour son montage à rotation sur un essieu autour d'un axe de rotation X. En particulier, les roues des atterrisseurs principaux sont très généralement équipés d'un frein qui comporte une pile de disques 3, dont des disques rotors 3a qui tournent avec la roue 1, et des disques stators 3b qui sont empêchés de tourner par coopération avec un tube de torsion appartenant au frein. La solidarisation en rotation des disques rotors 3a avec la jante 1 se fait par l'intermédiaire de barrettes 4 qui sont ici venues de matière avec la jante 1. Les disques rotors 3a comportent quant à eux des encoches dans lesquelles les barrettes 4 sont engagées pour former des obstacles propres à entraîner en rotation les disques rotors 3a avec la jante 1.

Ici, on a illustré la roue équipée d'un écran thermique constitué d'une succession de boucliers thermiques 211 (encore appelés pétales) s'étendant chacun entre deux barrettes pour protéger la face interne de la jante du rayonnement thermique engendré par le frottement des disques lors d'un freinage. Sur la figure 1, tous les boucliers thermiques 211 sont représentés en place sur la roue sauf l'un d'entre eux qui est en cours de mise en place. Les boucliers thermiques 211 se glissent selon une direction axiale entre deux barrettes 4. Le même principe de montage s'applique pour les boucliers 11 et 111.

Lorsque le bouclier thermique est comme ici équipé d'un radiateur à ailettes 220, ce dernier reste en saillie de la jante, les ailettes étant orientées vers l'extérieur pour rayonner vers l'extérieur et être baignées par l'air ambient.

Trois boucliers thermiques selon l'invention sont maintenant décrits plus en détail.

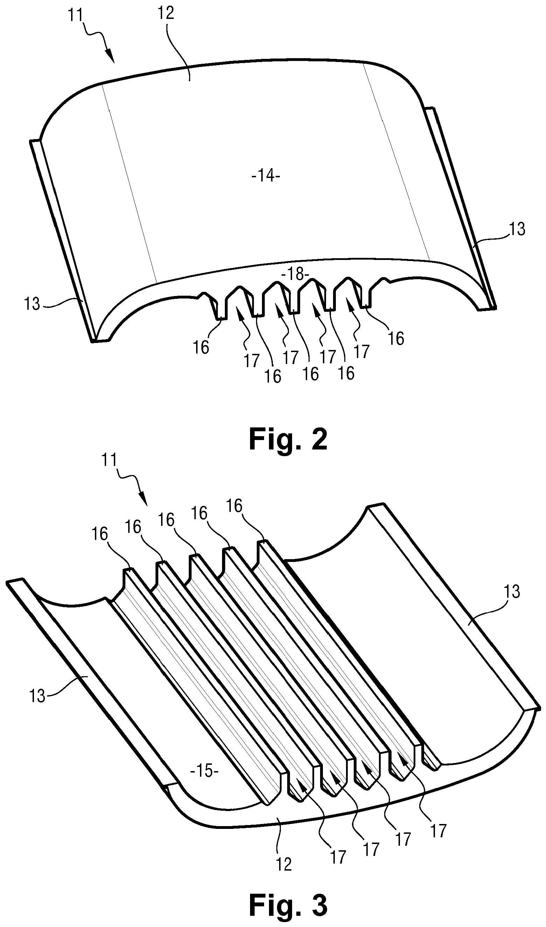

En référence aux figures 2 et 3, et conformément à un premier mode de réalisation de l'invention, chaque bouclier thermique 11 comporte un corps 12 comportant deux rebords latéraux 13 destinés à prendre appui sur des rebords homologues des barrettes 4. Ici, la face externe 14 du corps 12 est incurvée pour suivre la courbure de la jante. La face interne 15 du corps 12 en regard des disques comporte des nervures 16 longitudinales parallèles s'étendant en service selon la direction de l'axe de rotation X de la roue. Ces nervures (ici au nombre de sept) ont plusieurs rôles :
- elles définissent entre elles des canaux de convection 17 qui guident l'air chauffé par les disques de freins dans une direction axiale pour faciliter son écoulement vers l'extérieur de la jante, et ainsi favoriser le refroidissement de la roue ;
- elles augmentent la surface d'échange présentée à l'air échauffé présent sous la face interne du bouclier de sorte que le corps 12 du bouclier thermique peut absorber une quantité augmentée de chaleur, la stocker et la conduire vers la face terminale 18 de celui-ci pour la dissiper dans l'air ambiant par rayonnement et convection ;
- elles rigidifient mécaniquement le bouclier thermique 11.

Ainsi, les nervures longitudinales 16 organisent un mode de convection qui s'ajoute au mode de radiation pour faciliter l'absorption de chaleur générée par les disques de frein par le bouclier thermique 11.

De préférence, chaque bouclier thermique 11 est réalisé dans un matériau conducteur de chaleur, par exemple un alliage d'aluminium. Le cas échéant, il conviendra de protéger la face interne 15 contre la corrosion (par exemple sous la forme d'une oxydation anodique), et/ou l'équiper d'une protection thermique (par exemple une projection de céramique) empêchant tout dommage à ladite surface du fait des températures élevées atteintes par les disques.

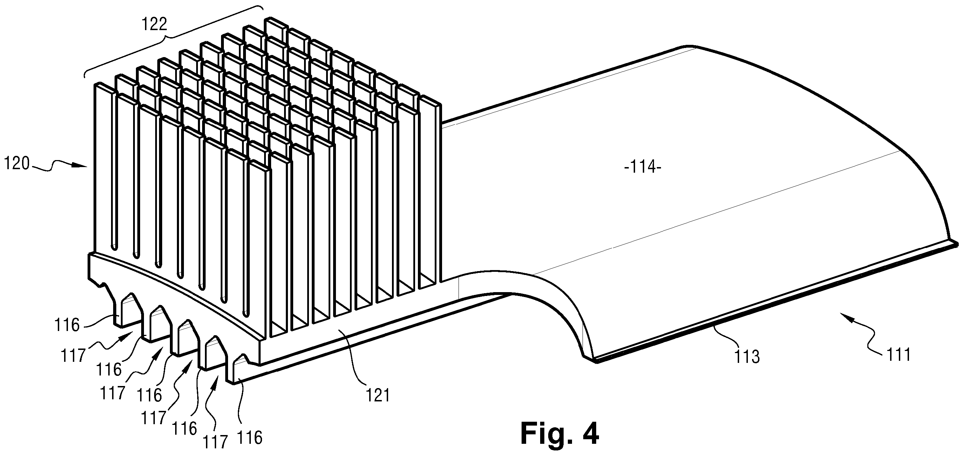

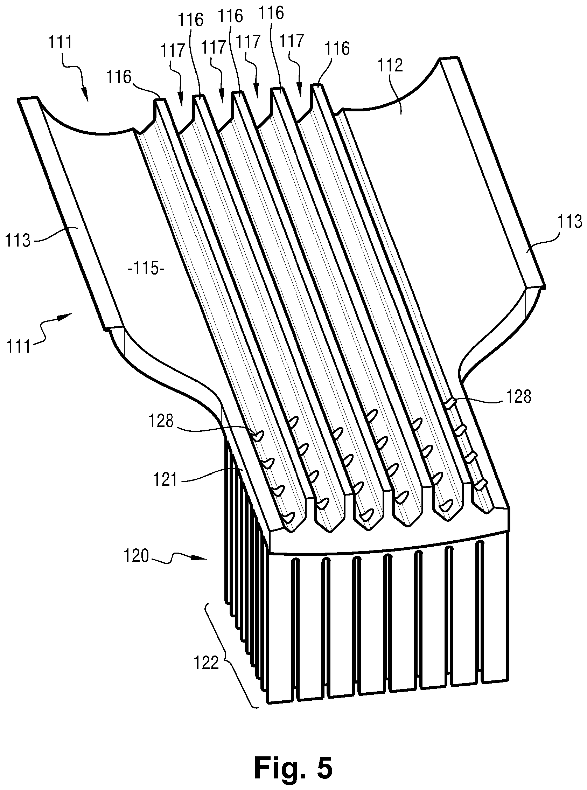

Dans un deuxième mode particulier de réalisation illustré aux figures 4 et 5 sur lesquelles les éléments communs ont une référence augmentée d'une centaine, la capacité de dissiper la chaleur absorbée par le corps 112 du bouclier thermique 111 est notablement augmentée en équipant le bouclier thermique d'un radiateur 120 comportant une semelle 121 qui s'étend dans le prolongement du corps 112 au-delà de la jante de la roue pour recevoir sur sa surface externe des ailettes 122 qui concourent à augmenter substantiellement la surface de dissipation de la chaleur absorbée par le corps du bouclier thermique, ce qui permet d'augmenter les transfert de chaleur par convection et rayonnement à l'air environnant. Les ailettes 122 tournent avec la roue, et la rotation de la roue contribue à créer autour des ailettes un flux convectif turbulent propre à accélérer la dissipation de la chaleur transférée par les boucliers thermiques 111 des disques de frein vers l'extérieur.

Ici, les ailettes 122 s'étendent en service selon des plans P perpendiculaires à l'axe de rotation X de la roue, à l'extérieur de la jante de celle-ci. Les ailettes 122 sont organisées ici à raison de neuf rangées rectilignes de huit ailettes. Les ailettes 122 sont ici venues de matière avec le reste du bouclier 111 et s'étendent en saillie de la face externe de la semelle 121.

Le bouclier thermique 11 est également équipé de nervures 116, qui présentent les mêmes avantages que précédemment. Ici, et selon une disposition particulièrement avantageuse de l'invention, les nervures 116 qui s'étendent depuis la face 115 en regard des disques se prolongent sous la semelle 121 pour rigidifier le bouclier thermique 11 et diminuer le risque de vibration du radiateur 120 qui s'étend en porte-à-faux du corps 112. Selon une disposition particulière, la semelle 121 est percée d'orifices traversants 128 (seuls certains sont référencés pour plus de clarté) permettant à l'air canalisé par les nervures 116 dans les canaux de convection 117 de circuler entre les ailettes 122 en provenance de la face interne 115 du bouclier thermique. Ces orifices traversants 128 sont ici disposés en quinconce.

Les ailettes 122 pourront prendre toute forme apte à favoriser la dissipation de chaleur par convection et rayonnement. On verra sur le mode de réalisation suivant un autre type d'ailettes, qui peut tout à fait être utilisé sur le bouclier thermique 111.

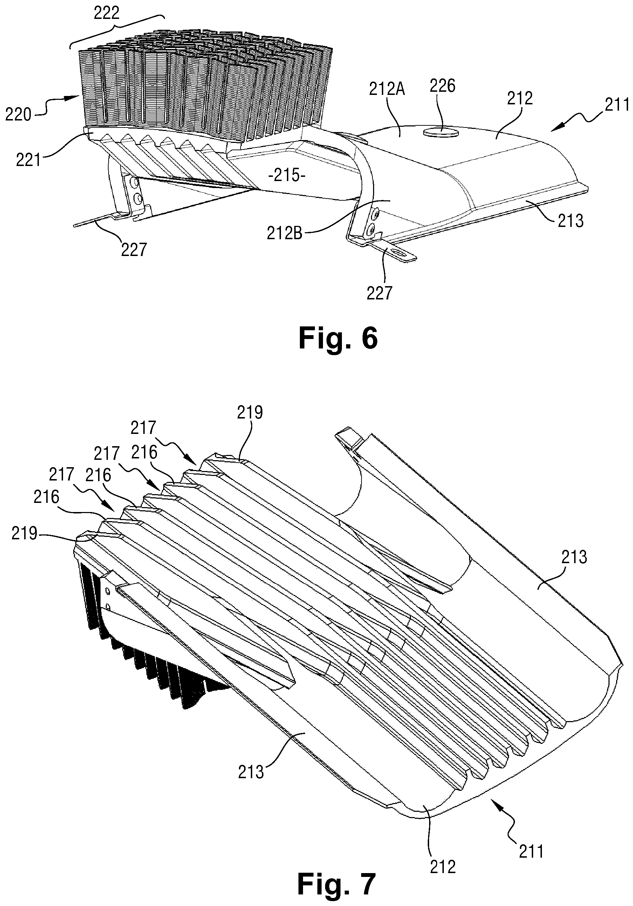

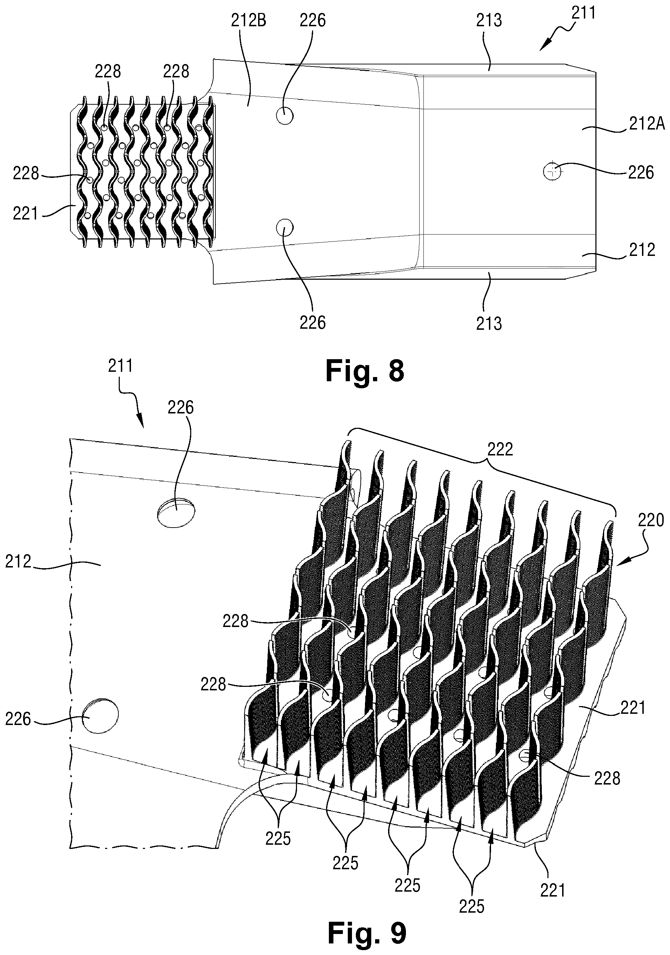

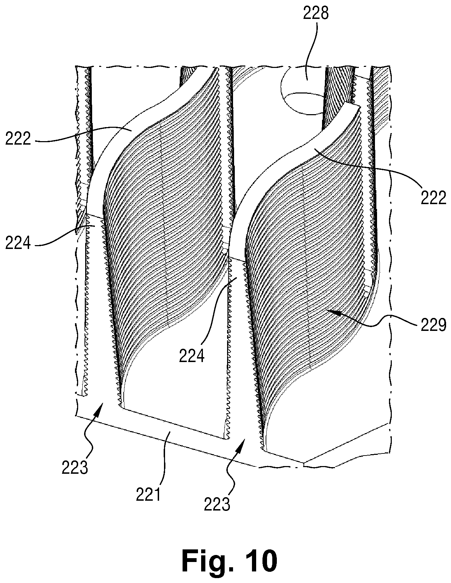

En référence maintenant aux figures 6 à 10, sur lesquelles les références des éléments communs ont encore été augmentés d'une centaine, l'invention s'applique également à un bouclier thermique 211 adapté à une roue telle qu'illustrée dans le document FR2990188 dont la jante a un profil au moins pour partie en pente. Ainsi, le corps 212 du bouclier thermique 211 a une première partie 212A similaire au bouclier thermique 11, en étant prolongée par une deuxième partie 212B qui s'élève en s'évasant légèrement par rapport aux bords latéraux 213 pour suivre la pente de la jante et ainsi présenter en regard des disques une face interne 215 dont une partie est inclinée, propre à faciliter l'évacuation de l'air échauffé par les disques et la réflexion des radiations vers l'extérieur de la roue.

Comme pour le mode de réalisation précédent, des nervures longitudinales 216 s'étendent selon l'invention sur la face interne 215 du bouclier. Le corps 212 est prolongé par un radiateur 220 comportant une semelle 221 qui s'étend dans le prolongement de la deuxième partie 212B du corps 212 en étant surmonté par des ailettes 222. Les nervures longitudinales 216 s'étendent jusque sous la semelle 221. Ici, deux nervures latérales 219, parallèles aux nervures longitudinales 216, s'étendent de part et d'autre des nervures longitudinales 216 pour rigidifier les flancs du radiateur 220.

Ici, les ailettes 222 sont organisées en neuf rangées selon un profil ondulé définissant entre elles des canaux de convection 225 ondulés. Chaque ailette 222 est ici plus large au niveau de son pied 223 qu'au niveau de sa tête 224 de sorte à présenter une section trapézoïdale, et les surfaces latérales 229 des ailettes 222 sont striées. Ces dispositions contribuent à augmenter l'échange de chaleur par convection avec l'air ambiant.

Comme dans l'exemple précédent, des orifices 228 disposés en quinconce traversent la semelle 221 du radiateur pour déboucher entre les ailettes permettant à l'air canalisé par les nervures 216 dans les canaux de convection 217 de circuler entre les ailettes 222 en provenance de la face interne 215 du bouclier thermique.

Ici, des plots élastomères en silicone 226 permettent l'appui du bouclier thermique 211 contre la jante de la roue. Des cavaliers 227 disposés à l'extrémité accessible des rebords 213 permettent la fixation du bouclier 211 sur les barrettes de la roue.

Pour optimiser leur action, les nervures longitudinales 16, 116, 216 sont de préférence réalisées selon les au moins l'une des caractéristiques dimensionnelles suivantes :
- épaisseur comprise entre 1 et 6 millimètres ;
- hauteur comprise entre 5 et 50 millimètres ;
- espacement d'une distance comprise entre 3 et 20 millimètres.

De même, les ailettes 122, 222 sont de préférence réalisées selon au moins l'une des caractéristiques dimensionnelles suivantes :
- hauteur comprise entre 10 et 60 millimètres ;
- épaisseur (mesurée à leur pied) comprise entre 0,5 et 6 millimètres ;
- espacement d'une distance comprise entre 3 et 20 millimètres.

L'invention n'est pas limitée à ce qui vient d'être décrit, mais englobe au contraire toute variante entrant dans le cadre défini par les revendications.

En particulier, bien qu'ici l'écran thermique se présente sous la forme d'une pluralité de boucliers ou pétales insérés entre les barrettes de la jante, on pourra prévoir un écran constitué d'autres parties, voire monobloc, du moment qu'il comporte, sur sa face en regard des disques de freins, des rainures longitudinales selon l'invention.

Bien qu'ici les boucliers soient monoblocs, on pourra réaliser des boucliers en plusieurs parties, par exemple un support en acier inoxydable recevant une portion thermiquement conductrice.

## Revendications

1. Roue freinée d'aéronef comportant une jante solidaire d'un moyeu pour son montage à rotation sur un essieu de l'aéronef selon un axe de rotation, la roue étant équipée d'un écran thermique (11 ; 111 ; 211) s'étendant en regard d'une face interne de la jante pour protéger la jante du rayonnement thermique généré par une pile de disques s'étendant à l'intérieur de la jante, l'écran thermique comportant une face en regard des disques (15 ; 115 ; 215), **caractérisé en ce que** la face comporte des nervures longitudinales (16 ; 116 ; 216) s'étendant en service parallèlement à l'axe de rotation de la roue.

2. Roue freinée d'aéronef selon la revendication 1, dont l'écran thermique comporte une pluralité de boucliers thermiques (11 ; 111 ; 211) insérés chacun entre deux barrettes de la roue, chacun des boucliers thermiques comportant un corps (12 ; 112 ; 212) bordés de rebords latéraux (13 ; 113 ; 213) pour son appui sur les barrettes, les nervures longitudinales s'étendant en saillie d'une face interne du corps en regard des disques.

3. Roue freinée selon la revendication 1, dans lequel les nervures longitudinales (16 ; 116 ; 216) présentent au moins l'une des caractéristiques suivantes :
- épaisseur comprise entre 1 et 6 millimètres ;
- hauteur comprise entre 5 et 50 millimètres ;
- espacement d'une distance comprise entre 3 et 20 millimètres.

4. Roue freinée selon la revendication 1, dans laquelle l'écran thermique comprend des boucliers thermiques comportant chacun un radiateur à ailettes qui s'étend dans le prolongement d'un corps (112 ; 212) du bouclier thermique, les rainures longitudinales se prolongeant sous une semelle (111 ; 211) du radiateur.

5. Roue freinée selon la revendication 4, dans laquelle les ailettes (122 ; 222) sont organisées en rangées s'étendant selon des plans P perpendiculaires à l'axe de rotation (X).

6. Roue freinée selon la revendication 5, dans laquelle les rangées s'étendent selon un profil rectiligne (122) ou un profil ondulé (222).

7. Roue freinées selon la revendication 4, dans laquelle les ailettes sont réalisées selon au moins l'une des caractéristiques dimensionnelles suivantes :
- hauteur comprise entre 10 et 60 millimètres ;
- épaisseur (mesurée à leur pied) comprise entre 0,5 et 6 millimètres ;
- espacement d'une distance comprise entre 3 et 20 millimètres.

8. Roue freinée selon la revendication 4, dans lequel la semelle du radiateur comporte des orifices traversants (128 ; 228) permettant à l'air canalisé dans des canaux de convection (117 ; 217) s'étendant entre les nervures longitudinales de circuler entre les ailettes (122 ; 222).

9. Roue freinée selon la revendication 8, dans laquelle les orifices traversants (128 ; 228) sont disposés en quinconce.

## Patentansprüche

1. Gebremstes Luftfahrzeugrad, umfassend eine Felge, die fest mit einer Nabe für ihre drehbare Montage auf einer Achse des Luftfahrzeugs um eine Rotationsachse verbunden ist, wobei das Rad mit einer Wärmeabschirmung (11; 111; 211) ausgestattet ist, die sich gegenüber einer Innenfläche der Felge erstreckt, um die Felge vor Wärmestrahlung zu schützen, die von einem Stapel Scheiben erzeugt wird, der sich im Inneren der Felge erstreckt, wobei die Wärmeabschirmung eine Fläche gegenüber den Scheiben (15; 115; 215) umfasst, **dadurch gekennzeichnet, dass** die Fläche Längsrippen (16; 116; 216) umfasst, die sich im Betrieb parallel zur Rotationsachse des Rades erstrecken.

2. Gebremstes Luftfahrzeugrad nach Anspruch 1, dessen Wärmeabschirmung eine Vielzahl von Hitzeschildern (11; 111; 211) umfasst, die jeweils zwischen zwei Stegen des Rades eingefügt werden, wobei jedes der Hitzeschilder einen Körper (12; 112; 212) umfasst, der von Seitenrändern (13; 113; 213) für seine Anlage an den Stegen begrenzt ist, wobei die Längsrippen von einer Innenfläche des Körpers gegenüber den Scheiben vorstehen.

3. Gebremstes Rad nach Anspruch 1, bei dem die Längsrippen (16; 116; 216) mindestens eines der folgenden Merkmale aufweisen:
- Dicke zwischen 1 und 6 Millimeter;
- Höhe zwischen 5 und 50 Millimeter;
- Beabstandung um einen Abstand zwischen 3 und 20 Millimeter.

4. Gebremstes Rad nach Anspruch 1, bei dem die Wärmeabschirmung Hitzeschilder umfasst, die jeweils einen Lamellenkühler enthalten, der sich in der Verlängerung eines Körpers (112; 212) des Hitzeschildes erstreckt, wobei sich die Längsrippen unter einer Grundplatte (111; 211) des Kühlers fortsetzen.

5. Gebremstes Rad nach Anspruch 4, bei dem die Lamellen (122; 222) in Reihen angeordnet sind, die sich in Ebenen P erstrecken, die senkrecht zur Rotationsachse (X) sind.

6. Gebremstes Rad nach Anspruch 5, bei dem sich die Reihen gemäß einem geraden Profil (122) oder einem gewellten Profil (222) erstrecken.

7. Gebremstes Rad nach Anspruch 4, bei dem die Lamellen gemäß mindestens einem der folgenden dimensionalen Merkmale hergestellt sind:
- Höhe zwischen 10 und 60 Millimeter;
- Stärke (gemessen an ihrem Fuß) zwischen 0,5 und 6 Millimeter;
- Beabstandung um einen Abstand zwischen 3 und 20 Millimeter.

8. Gebremstes Rad nach Anspruch 4, bei dem die Grundplatte des Kühlers Durchgangsöffnungen (128; 228) umfasst, durch die die Luft, die in sich zwischen den Längsrippen erstreckenden Konvektionskanälen (117; 217) geleitet wird, zwischen den Lamellen (122; 222) zirkulieren kann.

9. Gebremstes Rad nach Anspruch 8, bei dem die Durchgangsöffnungen (128; 228) versetzt angeordnet sind.

## Claims

1. An aircraft braked wheel comprising a rim integral with a hub for rotationally mounting thereof on an axle of the aircraft along an axis of rotation, the wheel being equipped with a heat shield (11; 111; 211) extending opposite an inner face of the rim to protect the rim from the thermal radiation generated by a stack of discs extending inside the rim, the heat shield having a face facing the discs (15; 115; 215), **characterized in that** the face has longitudinal ribs (16; 116; 216) extending in operation parallel to the axis of rotation of the wheel.

2. The aircraft braked wheel according to claim 1, the heat shield of which comprises a plurality of thermal screens (11; 111; 211) each inserted between two drive blocks of the wheel, each of the thermal screens comprising a body (12; 112; 212) bordered by side flanges (13; 113; 213) enabling the support thereof on the drive blocks, the longitudinal ribs extending to project from an inner face of the body facing the discs.

3. A braked wheel according to claim 1, wherein the longitudinal ribs (16; 116; 216) have at least one of the following characteristics:
- thickness between 1 and 6mm;
- height between 5 and 50mm;
- spacing between 3 and 20mm;

4. A braked wheel according to claim 1, wherein the heat shield comprises thermal screens each having a finned radiator which extends as an extension of a body (112; 212) of the thermal screen, the longitudinal grooves extending under a base plate (111; 211) of the radiator.

5. A braked wheel according to claim 4, wherein the fins (122; 222) are arranged in rows extending in planes P perpendicular to the axis of rotation (X).

6. A braked wheel according to claim 5, wherein the rows extend along a straight profile (122) or a corrugated profile (222).

7. A braked wheel according to claim 4, wherein the fins are made according to at least one of the following dimensional characteristics:
- height between 10 and 60mm;
- thickness (measured at their roots) between 0.5 and 6mm;
- spacing between 3 and 20mm;

8. A braked wheel according to claim 4, wherein the radiator base plate has through holes (128; 228) allowing air channelled into convection channels (117; 217) extending between the longitudinal ribs to flow between the fins (122; 222).

9. A braked wheel according to claim 8, wherein the through holes (128; 228) are arranged in staggered rows.
